# EUROPEAN PATENT APPLICATION

(11) **EP 2 750 011 A1**
(43) Date of publication of application: **02.07.2014**
(21) Application number: 12826154.2
(22) Date of filing: 15.06.2012
(51) Int. Cl.: G06F 3/048

(54) **PAGE SWITCHING METHOD AND DEVICE IN INTERACTIVE INTERFACE, AND COMPUTER STORAGE MEDIUM**

(30) Priority: 25.08.2011 CN 201110246627
(71) Applicant: Tencent Technology (Shenzhen) Company Limited, Shenzhen, Guangdon 518044 (CN)
(72) Inventor: DU, Jian, Shenzhen City Guangdong 518044 (CN); GAO, Ge, Shenzhen City Guangdong 518044 (CN); ZHONG, Lei, Shenzhen City Guangdong 518044 (CN)
(74) Representative: Cabinet Laurent & Charras
(86) International application number: PCT/CN2012/077036
(87) International publication number: WO 2013/026314

(57) **Abstract**

A method for switching pages in interfaces includes obtaining an operational event on an interface, and triggering pages in a screen to move following the operational event; obtaining a sign corresponding to the moving page according to a mapping relationship between pages and signs; controlling the sign to move synchronously with the moving page; and obtaining the page to be settled in the screen according to the operational event. The above method and apparatus for switching pages in interfaces and computer storage medium trigger the pages in the screen to move along with operational events when the user operates events on the interfaces; and the signs corresponding to the pages would synchronously move with the moving pages. The signs dynamically indicate the page positions during the switch of the pages, therefore the intermediate status during the switch of the pages could be dynamically indicated, and the users' operational events on the interface is also dynamically fed back, which improves the flexibility in switching pages.

## Description

### FIELD OF THE INVENTION

The present disclosure relates generally to the field of the technology for human-machine interaction, and more particularly, to a method and corresponding apparatus for switching pages in interfaces, and computer storage medium thereof.

### BACKGROUND OF THE INVENTION

Users' clicks on icons in the interfaces shall trigger corresponding applications to run. For meeting different requirement both for work and entertainment, people install more and more applications. Typically, the interface sets multiple consecutive pages, wherein various icons of the applications are distributed. Specific signs in the interface are used for indicating which page of the interface is the currently displaying page. The displaying signs are set according to the page sequence and are displayed as fixed in a location. The signs are also used for indicating the quantity of the pages in the interface; and the number of the currently displaying page is signed through the picture processing such as highlighting.

Conventionally in the interface, users may switch between pages through slide actions on the screen. For instant, the interface includes consequent first to fifth pages. The screen displays to the user the first page and five signs respectively corresponding to each page of the interface, and the sign corresponding to the first page is highlighted.

When the user wants to switch from the first page to the second page, he may slide in the first page from the right to the left through his finger, the consequent pages in the interface would move following the user's slide operation; and further the second page would stop at the center of the screen to be displayed to the user after the slide operation ends. At this time, the sign corresponding to the first page is no longer highlighted; instead the sign corresponding to the second page is displayed highlighted.

Contrarily, as the consequent pages of the interface are switched at the direction from the right to the left, the signs sequentially aligned along with the sequence of the pages are highlighted to be displayed at the direction from the left to the right; which means that the highlighted displaying order of the signs are opposite to the direction of the switching of the pages in the interface. The signs are just simply set with a mapping relationship with the pages while the sign is highlighted when the corresponding page is displayed in the screen. This would cause a mismatching between the movable pages and the fixed but oppositely displayed signs, and a lack of flexibility of the switching of the pages.

### SUMMARY OF THE INVENTION

Accordingly, it is necessary to provide a method for switching pages in interfaces which could improve the flexibility.

Besides, it is necessary to provide an apparatus for switching pages in interfaces which could improve the flexibility.

Besides, it is necessary to provide a computer storage medium which could improve the flexibility.

A method for switching pages in interfaces includes:
obtaining an operational event on an interface, and triggering pages in a screen to move following the operational event;
obtaining a sign corresponding to the moving page according to a mapping relationship between pages and signs;
controlling the sign to move synchronously with the moving page; and
obtaining the page to be settled in the screen according to the operational event.

Preferrably, controlling the sign to move synchronously with the moving page includes:
obtaining a position in the screen of the page corresponding to the sign;
calculating a position point according to the position of the page and a relative position of the sign in accordance with the corresponding page; and
moving the sign to the position point.

Preferably, calculating a position point according to the position of the page and a relative position of the sign in accordance with the corresponding page includes:
calculating a width of all previous *n-1* signs, wherein a page *pagen* of the interface is moving in the screen, and *1≤n≤N,* a sign corresponding to the page *pagen* is *pointn, N* is a quantity of all the signs;
calculating a position of the sign *pointn* in scope of the movable range of the screen according to the relative position of the sign *poihtn* in the page *pagen;*
calculating the position point as a sum of the width of all previous *n-1* signs and the position of the sign *pointn* in scope of the movable range of the screen.

Preferably, obtaining the page to be settled in the screen according to the operational event includes:
calculating a moving speed of an operational point according to a moving distance of the operational point in the operational event and a corresponding timing interval;
determining whether the operation on the interface is ended, if the operation on the interface is ended
determining whether the moving speed is larger than a threshold, obtaining the page occupying a largest area of the screen if it's no larger than the threshold;
displaying the obtained page on the screen.

Preferrably, the method further includes:
estimating the page to be displayed in the screen according to the moving speed if it is determined that the moving speed is larger than the threshold.

Preferably, the method further includes:
positioning corresponding sign in the page displayed in the screen according to the relative position of the sign in accordance with the corresponding page.

An apparatus for switching pages in interfaces includes:
an event trigger module for obtaining an operational event on an interface, and triggering pages in a screen to move following the operational event;
a sign obtaining module for obtaining a sign corresponding to the moving page according to a mapping relationship between pages and signs;
a synchronous movement module for controlling the sign to move synchronously with the moving page;
a processing module for obtaining the page to be settled in the screen according to the operational event.

Preferably, the synchronous movement module includes:
a position obtaining unit for obtaining a position in the screen of the page corresponding to the sign;
a position calculation unit for calculating a position point according to the position of the page and a relative position of the sign in accordance with the corresponding page;
a movement unit for moving the sign to the position point.

Preferably, the position calculation unit is further used for calculating a width of all previous *n-1* signs, wherein a page *pagen* of the interface is moving in the screen, and *1 ≤n ≤N,* a sign corresponding to the page *pagen* is *pointn, N* is a quantity of all the signs; calculating a position of the sign *pointn* in scope of the movable range of the screen according to the relative position of the sign *pointn* in the page *pagen;* calculating the position point as a sum of the width of all previous *n-1* signs and the position of the sign *pointn* in scope of the movable range of the screen.

Preferably, the processing module includes:
a speed calculation unit for calculating a moving speed of an operational point according to a moving distance of the operational point in the operational event and a corresponding timing interval;
an operation determination unit for determining whether the operation on the interface is ended, and informing a speed determination unit if yes;
a speed determination unit determining whether the moving speed is larger than a threshold, and informing a page obtaining unit if no;
a page obtaining unit for obtaining the page occupying a largest area of the screen, and displaying the obtained page on the screen.

Preferably, the processing module further includes:
an estimation unit for estimating the page to be displayed in the screen according to the moving speed.

Preferably, the apparatus further includes:
a sign positioning module for positioning corresponding sign in the page displayed in the screen according to the relative position of the sign in accordance with the corresponding page.

A computer storage medium for storing mobile terminal executable program, wherein the mobile terminal executable program is used for controlling a mobile terminal to perform a method for switching pages in interfaces, the method includes:
obtaining an operational event on an interface, and triggering pages in a screen to move following the operational event;
obtaining a sign corresponding to the moving page according to a mapping relationship between pages and signs;
controlling the sign to move synchronously with the moving page; and
obtaining the page to be settled in the screen according to the operational event.

Preferably, controlling the sign to move synchronously with the moving page includes:
obtaining a position in the screen of the page corresponding to the sign;
calculating a position point according to the position of the page and a relative position of the sign in accordance with the corresponding page; and
moving the sign to the position point.

Preferably, calculating a position point according to the position of the page and a relative position of the sign in accordance with the corresponding page includes:
calculating a width of all previous *n-1* signs, wherein a page *pagen* of the interface is moving in the screen, and *1≤n≤N,* a sign corresponding to the page *pagen* is *pointn, N* is a quantity of all the signs;
calculating a position of the sign *pointn* in scope of the movable range of the screen according to the relative position of the sign *poihtn* in the page *pagen;*
calculating the position point as a sum of the width of all previous *n-1* signs and the position of the sign *pointn* in scope of the movable range of the screen.

Preferably, obtaining the page to be settled in the screen according to the operational event includes:
calculating a moving speed of an operational point according to a moving distance of the operational point in the operational event and a corresponding timing interval;
determining whether the operation on the interface is ended, if the operation on the interface is ended
determining whether the moving speed is larger than a threshold, obtaining the page occupying a largest area of the screen if it's no larger than the threshold;
displaying the obtained page on the screen.

Preferably, the method further includes:
estimating the page to be displayed in the screen according to the moving speed if it is determined that the moving speed is larger than the threshold.

Preferably, the method further includes:
positioning corresponding sign in the page displayed in the screen according to the relative position of the sign in accordance with the corresponding page.

The above method and apparatus for switching pages in interfaces and computer storage medium trigger the pages in the screen to move along with operational events when the user operates events on the interfaces; and the signs corresponding to the pages would synchronously move with the moving pages. The signs dynamically indicate the page positions during the switch of the pages, therefore the intermediate status during the switch of the pages could be dynamically indicated, and the users' operational events on the interface is also dynamically fed back, which improves the flexibility in switching pages.

According to the above method and apparatus for switching pages in interfaces and computer storage medium, when the user ends up the operation on the interface, if it is determined that the moving speed is still larger than a predetermined threshold, it is estimated according to the moving speed to obtain the page to be settled in the screen; which fully considers the users' intention of operation, and further improves the accuracy and facility of the users' operation.

### BRIEF DESCRIPTION OF THE DRAWINGS

Fig. 1 is a flow diagram of a method for switching pages in interfaces according to an embodiment;
Fig. 2 is a flow diagram of a method for controlling the sign to synchronously move with the page of Fig. 1;
Fig. 3 is a diagram of the status change of the interface;
Fig. 4 is a flow diagram of a method for obtaining the page to be settled in the screen according to the operational event of Fig. 1;
Fig. 5 is a block diagram of an apparatus for switching pages in interfaces according to an embodiment;
Fig. 6 is a block diagram of the synchronous movement module of Fig. 5;
Fig. 7 is a block diagram of the processing module of Fig. 5.

### DESCRIPTION OF THE PREFERRED EMBODIMENTS

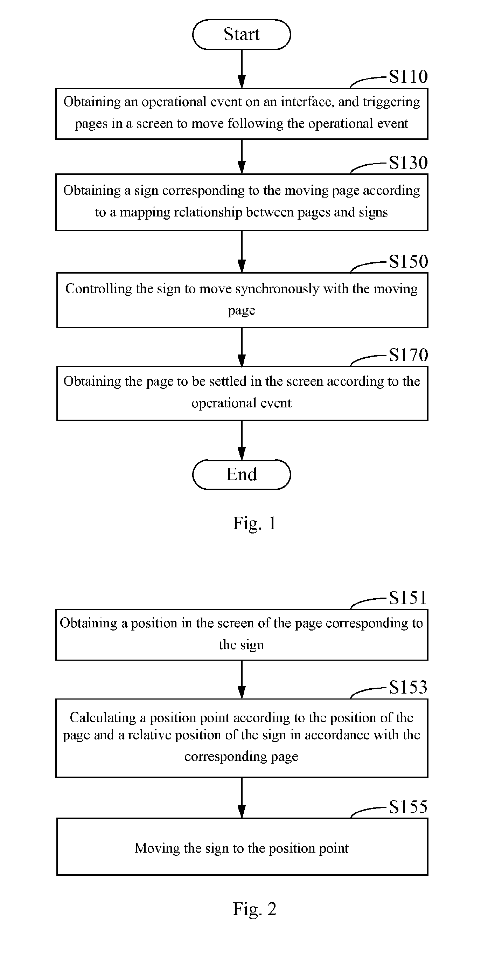

Fig. 1 illustrates a flow diagram of a method for switching pages in interfaces according to one embodiment. The method includes as follows.

Step S110, obtaining an operational event on an interface, and triggering pages in a screen to move following the operational event.

According to the current embodiment, the operational event on the interface could be a slide operation on the screen by a user through his finger, or a move operation on the displayed interface through a touch pen, wherein the screen is a touch screen. After obtaining the operational even on the interface, the page in the screen would move according to the direction that the user slides.

Step S130, obtaining a sign corresponding to the moving page according to a mapping relationship between pages and signs.

According to the current embodiment, each page is corresponding to a sign for dynamically identifying a position of the page. The signs are dots or other simple elements like basic figures. Quantity of the pages is used for indicating the quantity of the pages in the interface. In a preferred embodiment, the sign in a center position is corresponding to the displaying page in the screen, for indicating a position of the page and other status.

Step S 150, controlling the sign to move synchronously with the moving page.

In the present embodiment, when there is a page movement in the screen, the sign corresponding to the moving page is controlled to move synchronously, for dynamically instructing a location of the moving page.

According to a detailed embodiment, referring to Fig. 2, the above step S150 could include in details as follows.

Step S151, obtaining a position in the screen of the page corresponding to the sign.

In this embodiment, for performing a consequential switching effect of the pages, the current position of the moving page could be obtained every short time interval or predetermined time frame. In a preferred embodiment, the position of the page in the screen could be expressed through coordinates. For instance, an x axis of an origin of the coordinates could be set at a left edge of the screen, whereas a left edge of the page in accordance with the x axis would be the position of the page in the screen.

Step S153, calculating a position point according to the position of the page and a relative position of the sign in accordance with the corresponding page.

In the embodiment, when a page is completely displayed in the screen, for the sign corresponding to the page, the position of the sign shall instruct that the page corresponding to the sign is completely displayed, while the screen is displaying the entire page and the corresponding sign. Whereas, the relative position of the sign in relation to the page shall be fixed, which means that when any page is displayed in the screen, the position for displaying the corresponding sign in the page shall be a fixed position. In a preferred embodiment, the relative position of the sign in relation to the page could be a middle position of the page.

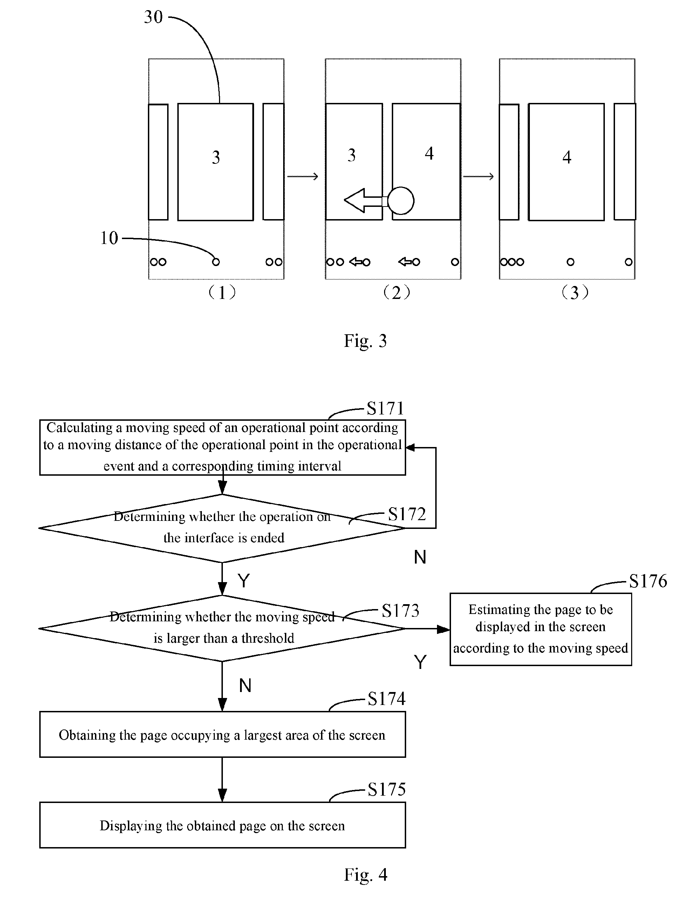

Fig. 3 illustrates a status change of the interface according to a detailed embodiment. In this embodiment, consecutive page 30 moves in the scree, multiple signs 10 are set at a bottom position of the page 30; it could be concluded through the quantity of the signs 10 that the interface is constituted through 5 consecutive pages.

Referring to status figure (1), the screen is displaying the third page 30 of the interface, and it can be concluded through the x axis which takes the left edge of the screen as the origin that position of the sign 10 corresponding to the page 30 is located at a middle position of the third page 30.

When there is an operational event that the user imposes a slide operation on the screen in the direction from the right to the left through his finger, referring to status figure (2), the third page 30 moves to the left edge of the screen, and is partly hidden. The fourth page 30 starts to be displayed in the screen whereas signs 10 corresponding to the third page 30 and the fourth page 30 moves correspondingly to the left of the screen with its relative moving page.

Referring to status figure (3), when the operational event ends, the fourth page 30 stays on the screen, wherein, the sign 10 corresponding to the fourth page 30 would stay in a set position in the page 30 corresponding to this sign 10, which is a middle position of the fourth page.

As described above, during the process of switching pages in the interface, the sign *poihtn* corresponding to the moving page would have a moving range of *((n-1)*pw)~(w-(N-n)*pw),* wherein pw is a width of each sign. For instance, if the sign is a circular point, pw would be a diameter of the circular point; or if the sign is a rectangular figure, pw would be a width of the rectangular. Wherein w is a width of the screen, N is a quantity of all the signs. Assuming there are N pages in the interface and N signs, and *page1~pageN* are used for representing each page of the interface, while *poiht1~poihtN* are representing the signs in the screen. For example, a page *pagen* of the interface is moving in the screen, and *1≤n≤N,* the corresponding sign would be *pointn,* it could be calculated through a coordinate *pagenx* of the page *pagen* on the x axis and the width of the screen. First, calculating a width of all previous *n-1* signs, which is *(n-1)*pw*, then calculating a position of the sign *pointn* in scope of the movable range of the screen according to the relative position of the sign *pointn* in the page *pagen,* which is *[(pagenx+w)*/*(b*w)]*{[w-(N-n)*pw]-[(n-1)*pw]},* wherein *b* is a reciprocal of the relative position of the sign *pointn* in the corresponding page *pagen,* for example if the sign *pointn* is located in a middle position of the page *pagen, b* shall have the value 2. Finally, calculating the position point as a sum of the width of all previous *n-1* signs and the position of the sign *pointn* in scope of the movable range of the screen; the position point is the coordinate on the x axis, which is: *pointnx=[(n-1) *pw]⁺ [(pagenx+w)*/*(b*w)]*{[w-(N-n)*pw]-[(h-1)*pw]}.*

Step S155, moving the sign to the position point.

In the present embodiment, after the position point of the sign is calculated, moving the sign to the calculated position point, for performing a synchronous move of the sign with the page.

Step S170, obtaining the page to be settled in the screen according to the operational event.

In the present embodiment, after the user's operational event ends, it is obtained the page to be settled in the screen; the page shall be the page that the user switches.

In a detailed embodiment, referring to Fig. 4, the above step S170 includes in details as follows.

Step S171, calculating a moving speed of an operational point according to a moving distance of the operational point in the operational event and a corresponding timing interval.

According to the current embodiment, in the user's operational event, a point that the user's finger or the touch pen contact with the touch screen would be the operational point; wherein the operational point moves along with the user's operational event. For obtaining the moving speed of the operational speed, the x axis coordinate of the operational point is caught for calculation. For instant, if at a time *t1* the coordinate is *x1*, and at a time *t2* the coordinate is *x2*, the moving speed of the operational point would be *(x2-x1)*/*(t2-t1*).

Step S172, determining whether the operation on the interface is ended, step S173 is followed if yes, or step S171 is followed back if no.

In the current embodiment, if it is determined that the operation on the interface is ended, it shall be determined the page to be settled in the screen according to the calculated moving speed; if the operation on the interface is still going on, it would be continued to calculate the moving speed. In an embodiment, the process for determining whether the operation on the interface is ended would be the check of the operation on the interface to determine if there is a lift operation. If there is a lift operation, it would mean that the operation on the interface is ended.

Step S173, determining whether the moving speed is larger than a threshold, step S174 is followed if no, or step S176 is followed if yes.

In the present embodiment, when the operation on the interface is ended, based on the intention of the user, the moving speed of the operational point could be a very little value or zero, or could be a very large. In case that the moving speed of the operational point is very little or zero, the current page settling in the screen would be the page that the user intends to switch. For instance, if one page is settled in the current screen, the displaying page shall be the page to be displayed to the user; if two consecutive pages are settled in the current screen, the one page that occupies more area of the screen would be the possible page that the user intends to switch, and therefore this page with the larger area would be the page to be displayed to the user. In case that the moving speed of the operational point is very large, it would be needed to estimate according to the moving speed for obtaining the page to be displayed after fully consideration of the user's operation intention.

Step S174, obtaining the page occupying a largest area of the screen.

Step S175, displaying the obtained page on the screen.

Step S176, estimating the page to be displayed in the screen according to the moving speed.

In the present embodiment, when determined that the moving speed of the operational point is larger than a predetermined threshold, which would indicate that the user might slide the pages to a next page, wherein the next page would be the page to be displayed in the screen.

In the above method for switching pages in interfaces, it is included after step S170 a step of positioning corresponding sign in the page displayed in the screen according to the relative position of the sign in accordance with the corresponding page.

In the current embodiment, after obtaining the page to be displayed in the screen, obtaining the position of the sign according to the relative position of the sign in accordance with the corresponding page. For example, if the relative position of the sign in the corresponding page is a middle position, the sign would be positioned in the middle position of the page after obtaining the page to be displayed in the screen.

During the above switching process of pages in the interfaces, multiple consecutive pages of the interface move in the screen, the multiple consecutive pages move horizontally according to the actual demands, and are signed through x axis coordinates. Relatively, it could be that multiple consecutive pages move longitudinally, and are signed through y axis coordinates. However the above process for switching pages could be used for switching between multiple consecutive pages regardless of the pages in the interface move horizontally or longitudinally.

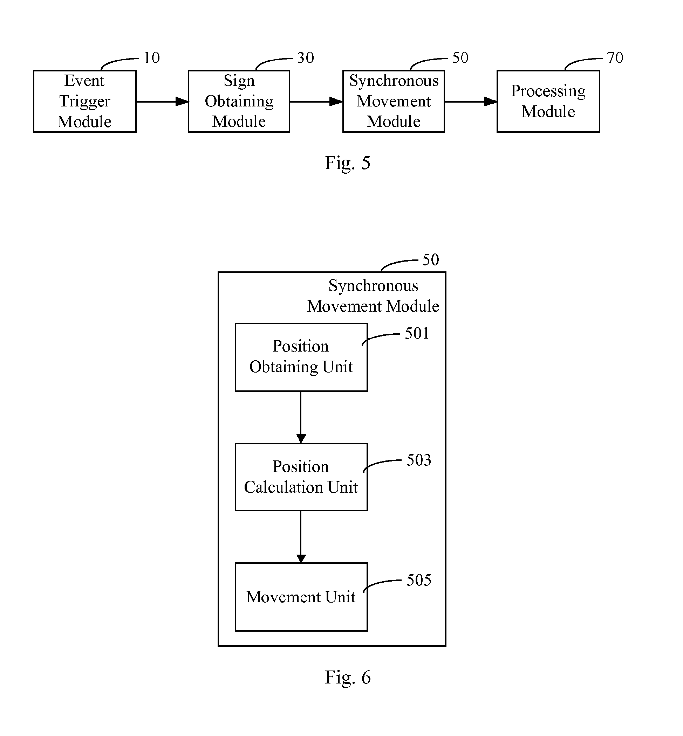

Fig. 5 illustrates an apparatus for switching pages in interfaces in accordance with an embodiment. The apparatus includes an event trigger module 10, a sign obtaining module 30, a synchronous movement module 50, and a processing module 70.

The event trigger module 10 is used for obtaining an operational event on an interface, and triggering pages in a screen to move following the operational event.

According to the current embodiment, the operational event on the interface that the event trigger module 10 obtained could be a slide operation on the screen by a user through his finger, or a move operation on the displayed interface through a touch pen, wherein the screen is a touch screen. After the event trigger module 10 obtaining the operational even on the interface, the page in the screen would move according to the direction that the user slides.

The sign obtaining module 30 is used for obtaining a sign corresponding to the moving page according to a mapping relationship between pages and signs.

According to the current embodiment, each page is corresponding to a sign for dynamically identifying a position of the page. The signs are dots or other simple elements like basic figures. Quantity of the pages is used for indicating the quantity of the pages in the interface. In a preferred embodiment, the sign in a center position is corresponding to the displaying page in the screen, for indicating a position of the page and other status.

The synchronous movement module 50 is used for controlling the sign to move synchronously with the moving page.

In the present embodiment, when there is a page movement in the screen, the sign corresponding to the moving page is controlled by the synchronous movement module 50 to move synchronously, for dynamically instructing a location of the moving page.

In a preferred embodiment, as illustrated in Fig. 6, the above synchronous movement module 50 includes a position obtaining unit 501, a position calculation unit 503, and a movement unit 505.

The position obtaining unit 501 is used for obtaining a position in the screen of the page corresponding to the sign.

In this embodiment, for performing a consequential switching effect of the pages, the position obtaining unit 501 could obtain the current position of the moving page every short time interval or predetermined time frame. In a preferred embodiment, the position of the page in the screen could be expressed through coordinates. For instance, an x axis of an origin of the coordinates could be set at a left edge of the screen, whereas a left edge of the page in accordance with the x axis would be the position of the page in the screen.

The position calculation unit 503 is used for calculating a position point according to the position of the page and a relative position of the sign in accordance with the corresponding page.

In the embodiment, when a page is completely displayed in the screen, for the sign corresponding to the page, the position of the sign shall instruct that the page corresponding to the sign is completely displayed, while the screen is displaying the entire page and the corresponding sign. Whereas, the relative position of the sign in relation to the page shall be fixed, which means that when any page is displayed in the screen, the position for displaying the corresponding sign in the page shall be a fixed position. In a preferred embodiment, the relative position of the sign in relation to the page could be a middle position of the page.

The sign *pointn* corresponding to the moving page would have a moving range of *((n-1)*pw)~(w-(N-n)*pw),* wherein pw is a width of each sign. For instance, if the sign is a circular point, pw would be a diameter of the circular point; or if the sign is a rectangular figure, pw would be a width of the rectangular. Wherein w is a width of the screen, *N* is a quantity of all the signs. Assuming there are *N* pages in the interface and *N* signs, and *page1~pageN* are used for representing each page of the interface, while *point1~pointN* are representing the signs in the screen. For example, a page *pagen* of the interface is moving in the screen, and *1≤n*≤*N*, the corresponding sign would be *pointn,* the position calculation unit 503 would calculate through a coordinate *pagenx* of the page *pagen* on the x axis and the width of the screen. First, calculating a width of all previous *n-1* signs, which is *(n-1)*pw,* then calculating a position of the sign *pointn* in scope of the movable range of the screen according to the relative position of the sign *pointn* in the page *pagen,* which is *[(pagenx+w)*/*(b*w)]*{[w-(N-n)*pw]-[(n-1)*pw]},* wherein b is a reciprocal of the relative position of the sign *pointn* in the corresponding page *pagen,* for example if the sign *pointn* is located in a middle position of the page *pagen, b* shall have the value 2. Finally, calculating the position point as a sum of the width of all previous *n-1* signs and the position of the sign *pointn* in scope of the movable range of the screen; the position point is the coordinate on the x axis, which is: *pointnx*=*[(n-1)*pw]*+ *[(pagenx+w)*/*(b*w)]*{[w-(N-n)*pw]-[(n-1)*pw]}.*

The movement unit 505 is used for moving the sign to the position point.

In the present embodiment, after the position point of the sign is calculated, the movement unit 505 moves the sign to the calculated position point, for performing a synchronous move of the sign with the page.

The processing module 70 is used for obtaining the page to be settled in the screen according to the operational event.

In the present embodiment, after the user's operational event ends, the processing module 70 obtains the page to be settled in the screen; the page shall be the page that the user switches.

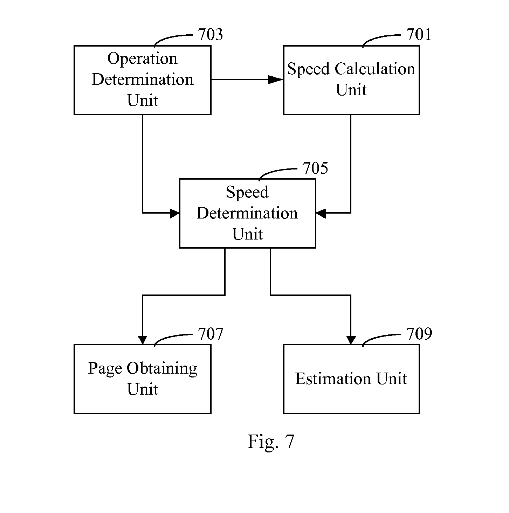

In a detailed embodiment, referring to Fig. 7, the processing module 70 includes a speed calculation unit 701, an operation determination unit 703, a speed determination unit 705, a page obtaining unit 707, and an estimation unit 709.

The speed calculation unit 701 is used for calculating a moving speed of an operational point according to a moving distance of the operational point in the operational event and a corresponding timing interval.

According to the current embodiment, in the user's operational event, a point that the user's finger or the touch pen contact with the touch screen would be the operational point; wherein the operational point moves along with the user's operational event. For obtaining the moving speed of the operational speed, the speed calculation unit 701 catches the x axis coordinate of the operational point for calculation. For instant, if at a time *t1* the coordinate is *x1,* and at a time *t2* the coordinate is *x2,* the moving speed of the operational point would be *(x2-x1)l( t2-t1).*

The operation determination unit 703 is used for determining whether the operation on the interface is ended, and informing the speed determination unit 705 if yes, or informing the speed calculation unit 701 if no.

In the current embodiment, if the operation determination unit 703 determines that the operation on the interface is ended, it shall be determined the page to be settled in the screen according to the calculated moving speed; if the operation on the interface is still going on, it would be continued to calculate the moving speed. In an embodiment, the process for determining whether the operation on the interface is ended would be the check of the operation on the interface to determine if there is a lift operation. If there is a lift operation, it would mean that the operation on the interface is ended.

The speed determination unit 705 is used for determining whether the moving speed is larger than a threshold, and informing the page obtaining unit 707 if no, or informing the estimation unit 709 if yes.

In the present embodiment, when the operation on the interface is ended, based on the intention of the user, the moving speed of the operational point could be a very little value or zero, or could be a very large. In case that the moving speed of the operational point is very little or zero, the current page settling in the screen would be the page that the user intends to switch. For instance, if one page is settled in the current screen, the displaying page shall be the page to be displayed to the user; if two consecutive pages are settled in the current screen, the one page that occupies more area of the screen would be the possible page that the user intends to switch, and therefore this page with the larger area would be the page to be displayed to the user. In case that the moving speed of the operational point is very large, it would be needed to estimate according to the moving speed for obtaining the page to be displayed after fully consideration of the user's operation intention.

The page obtaining unit 707 is used for obtaining the page occupying a largest area of the screen, and displaying the obtained page on the screen.

The estimation unit 709 is used for estimating the page to be displayed in the screen according to the moving speed.

In the present embodiment, when determined that the moving speed of the operational point is larger than a predetermined threshold, which would indicate that the user might slide the pages to a next page, wherein the next page would be the page to be displayed in the screen.

Besides the event trigger module 10, the sign obtaining module 30, the synchronous movement module 50, and the processing module 70, the above apparatus for switching pages in interfaces includes also a sign positioning module 90.

The sign positioning module 90 is used for positioning corresponding sign in the page displayed in the screen according to the relative position of the sign in accordance with the corresponding page.

In the current embodiment, after obtaining the page to be displayed in the screen, the sign positioning module 90 obtains the position of the sign according to the relative position of the sign in accordance with the corresponding page. For example, if the relative position of the sign in the corresponding page is a middle position, the sign positioning module 90 would position the sign in the middle position of the page after obtaining the page to be displayed in the screen.

During the above switching process of pages in the interfaces, multiple consecutive pages of the interface move in the screen, the multiple consecutive pages move horizontally according to the actual demands, and are signed through x axis coordinates. Relatively, it could be that multiple consecutive pages move longitudinally, and are signed through y axis coordinates. However the above process for switching pages could be used for switching between multiple consecutive pages regardless of the pages in the interface move horizontally or longitudinally.

The present disclosure provides computer storage medium in which a mobile terminal executable program is stored, wherein the mobile terminal executable program is used for controlling a mobile terminal to perform the above method for switching pages in interfaces. The detailed steps that the mobile terminal executable program stored in the computer storage medium performs the method for switching pages in interfaces is described as the method above, and would not be described herein.

The above apparatus for switching pages in interfaces could be applicable in mobile terminals such as mobile phones, tablet PCs, etc.

The above method and apparatus for switching pages in interfaces and computer storage medium trigger the pages in the screen to move along with operational events when the user operates events on the interfaces; and the signs corresponding to the pages would synchronously move with the moving pages. The signs dynamically indicate the page positions during the switch of the pages, therefore the intermediate status during the switch of the pages could be dynamically indicated, and the users' operational events on the interface is also dynamically fed back, which improves the flexibility in switching pages.

According to the above method and apparatus for switching pages in interfaces and computer storage medium, when the user ends up the operation on the interface, if it is determined that the moving speed is still larger than a predetermined threshold, it is estimated according to the moving speed to obtain the page to be settled in the screen; which fully considers the users' intention of operation, and further improves the accuracy and facility of the users' operation.

The above described embodiments explain only several exemplary embodiments of the present disclosure. It shall be mentioned that for those skilled in the art, alternative embodiments could be made to which the present disclosure pertains without departing from its spirit and scope, wherein the alternative embodiments shall be defined as within the claim of the current disclosure.

## Claims

1. A method for switching pages in interfaces, wherein the method comprises:
obtaining an operational event on an interface, and triggering pages in a screen to move following the operational event;
obtaining a sign corresponding to the moving page according to a mapping relationship between pages and signs;
controlling the sign to move synchronously with the moving page; and
obtaining the page to be settled in the screen according to the operational event.

2. The method for switching pages in interfaces according to claim 1, wherein controlling the sign to move synchronously with the moving page comprises:
obtaining a position in the screen of the page corresponding to the sign;
calculating a position point according to the position of the page and a relative position of the sign in accordance with the corresponding page; and
moving the sign to the position point.

3. The method for switching pages in interfaces according to claim 2, wherein calculating a position point according to the position of the page and a relative position of the sign in accordance with the corresponding page comprises:
calculating a width of all previous *n-1* signs, wherein a page *pagen* of the interface is moving in the screen, and *1*≤*n*≤*N*, a sign corresponding to the page *pagen* is *pointn, N* is a quantity of all the signs;
calculating a position of the sign *pointn* in scope of the movable range of the screen according to the relative position of the sign *pointn* in the page *pagen;*
calculating the position point as a sum of the width of all previous *n-1* signs and the position of the sign *poihtn* in scope of the movable range of the screen.

4. The method for switching pages in interfaces according to claim 1, wherein obtaining the page to be settled in the screen according to the operational event comprises:
calculating a moving speed of an operational point according to a moving distance of the operational point in the operational event and a corresponding timing interval;
determining whether the operation on the interface is ended, if the operation on the interface is ended
determining whether the moving speed is larger than a threshold, obtaining the page occupying a largest area of the screen if it's no larger than the threshold;
displaying the obtained page on the screen.

5. The method for switching pages in interfaces according to claim 4, wherein the method further comprises:
estimating the page to be displayed in the screen according to the moving speed if it is determined that the moving speed is larger than the threshold.

6. The method for switching pages in interfaces according to claim 1, wherein the method further comprises:
positioning corresponding sign in the page displayed in the screen according to the relative position of the sign in accordance with the corresponding page.

7. An apparatus for switching pages in interfaces, wherein the apparatus comprises:
an event trigger module for obtaining an operational event on an interface, and triggering pages in a screen to move following the operational event;
a sign obtaining module for obtaining a sign corresponding to the moving page according to a mapping relationship between pages and signs;
a synchronous movement module for controlling the sign to move synchronously with the moving page;
a processing module for obtaining the page to be settled in the screen according to the operational event.

8. The apparatus for switching pages in interfaces according to claim 7, wherein the synchronous movement module comprises:
a position obtaining unit for obtaining a position in the screen of the page corresponding to the sign;
a position calculation unit for calculating a position point according to the position of the page and a relative position of the sign in accordance with the corresponding page;
a movement unit for moving the sign to the position point.

9. The apparatus for switching pages in interfaces according to claim 8, wherein the position calculation unit is further used for calculating a width of all previous *n-1* signs, wherein a page *pagen* of the interface is moving in the screen, and *1≤n≤N,* a sign corresponding to the page *pagen* is *pointn, N* is a quantity of all the signs; calculating a position of the sign *pointn* in scope of the movable range of the screen according to the relative position of the sign *pointn* in the page *pagen;* calculating the position point as a sum of the width of all previous *n-1* signs and the position of the sign *pointn* in scope of the movable range of the screen.

10. The apparatus for switching pages in interfaces according to claim 7, wherein the processing module comprises:
a speed calculation unit for calculating a moving speed of an operational point according to a moving distance of the operational point in the operational event and a corresponding timing interval;
an operation determination unit for determining whether the operation on the interface is ended, and informing a speed determination unit if yes;
a speed determination unit determining whether the moving speed is larger than a threshold, and informing a page obtaining unit if no;
a page obtaining unit for obtaining the page occupying a largest area of the screen, and displaying the obtained page on the screen.

11. The apparatus for switching pages in interfaces according to claim 10, wherein the processing module further comprises:
an estimation unit for estimating the page to be displayed in the screen according to the moving speed.

12. The apparatus for switching pages in interfaces according to claim 7, wherein the apparatus further comprises:
a sign positioning module for positioning corresponding sign in the page displayed in the screen according to the relative position of the sign in accordance with the corresponding page.

13. A computer storage medium for storing mobile terminal executable program, wherein the mobile terminal executable program is used for controlling a mobile terminal to perform a method for switching pages in interfaces, the method comprising:
obtaining an operational event on an interface, and triggering pages in a screen to move following the operational event;
obtaining a sign corresponding to the moving page according to a mapping relationship between pages and signs;
controlling the sign to move synchronously with the moving page; and
obtaining the page to be settled in the screen according to the operational event.

14. The computer storage medium according to claim 13, wherein controlling the sign to move synchronously with the moving page comprises:
obtaining a position in the screen of the page corresponding to the sign;
calculating a position point according to the position of the page and a relative position of the sign in accordance with the corresponding page; and
moving the sign to the position point.

15. The computer storage medium according to claim 14, wherein calculating a position point according to the position of the page and a relative position of the sign in accordance with the corresponding page comprises:
calculating a width of all previous *n-1* signs, wherein a page *pagen* of the interface is moving in the screen, and *1≤n*≤*N*, a sign corresponding to the page *pagen* is *pointn, N* is a quantity of all the signs;
calculating a position of the sign *pointn* in scope of the movable range of the screen according to the relative position of the sign *pointn* in the page *pagen;*
calculating the position point as a sum of the width of all previous *n-1* signs and the position of the sign *poihtn* in scope of the movable range of the screen.

16. The computer storage medium according to claim 13, wherein obtaining the page to be settled in the screen according to the operational event comprises:
calculating a moving speed of an operational point according to a moving distance of the operational point in the operational event and a corresponding timing interval;
determining whether the operation on the interface is ended, if the operation on the interface is ended
determining whether the moving speed is larger than a threshold, obtaining the page occupying a largest area of the screen if it's no larger than the threshold;
displaying the obtained page on the screen.

17. The computer storage medium according to claim 16, wherein the method further comprises:
estimating the page to be displayed in the screen according to the moving speed if it is determined that the moving speed is larger than the threshold.

18. The computer storage medium according to claim 13, wherein the method further comprises:
positioning corresponding sign in the page displayed in the screen according to the relative position of the sign in accordance with the corresponding page.
